# EUROPÄISCHE PATENTSCHRIFT

(11) **EP 0 824 264 B1**
(45) Veröffentlichungstag und Bekanntmachung des Hinweises auf die Patenterteilung: **02.10.2002**
(21) Anmeldenummer: 97113620.5
(22) Anmeldetag: 07.08.1997
(51) Int. Cl.: H01H 31/00, H01H 3/40, H02B 13/075

(54) **Trenn-Erderschalter für eine metallgekapselte, gasisolierte Hochspannungsschaltanlage**
Isolating and earthing switch for a metal-clad gas-insulated high voltage switch installation
Sectionneur de mise à la terre pour une installation de commutation à haute tension, blindée et à isolation gazeuse

(30) Priorität: 13.08.1996 DE 19632574
(43) Veröffentlichungstag der Anmeldung: 18.02.1998
(73) Patentinhaber: ABB PATENT GmbH, 68526 Ladenburg (DE)
(72) Erfinder: Neumaier, Heinrich, 77756 Hausach (DE); Thomas, Volker, 63456 Hanau (DE)
(74) Vertreter: Miller, Toivo

(56) Entgegenhaltungen:
- EP-A- 0 678 952
- DE-A- 2 414 200
- DE-U- 8 220 782
- US-A- 3 665 135

## Beschreibung

Die Erfindung betrifft einen Trenn-Erderschalter für eine metallgekapselte, gasisolierte Hochspannungsschaltanlage gemäß dem Oberbegriff des Anspruches 1. (DE-A-24 14 200)

Trennschalter, die auch eine Erdung vornehmen können, sind in großer Vielzahl bekannt geworden. Viele besitzen ein Trennmesser, welches drehbar gelagert ist und sowohl in eine Trennstellung, als auch in eine Einschaltstellung sowie in eine Erdungsstellung verschwenkt werden kann.

Trennschalter, bei denen zum Ein- und Ausschalten eine Schubbewegung eines beweglichen Kontaktstückes vorgenommen wird, besitzen zusätzliche Erdungskontaktstücke in Form von Erdungsmessern, mit denen die Erdung vorgenommen werden kann.

Aufgabe der Erfindung ist es, einen Trenn-Erdungsschalter der eingangs genannten Art zu schaffen, bei dem eine konstruktiv einfache Lösung ermöglicht ist.

Diese Aufgabe wird erfindungsgemäß gelöst durch die Merkmale des Anspruches 1.

Gemäß einer ersten Ausführungsform der Erfindung kann das Schubkontaktstück von einem Zahngetriebe antreibbar sein, dessen Ritzel im Kontaktgehäuse untergebracht ist und mit einem Zahnstangenabschnitt am Schubkontaktstück kämmt.

Gemäß einer zweiten Ausführungsform der Erfindung kann das bewegliche Kontaktstück mittels einer Gewindespindel antreibbar sein, die von einem außerhalb der Kapselung angeordneten Antrieb in Drehung versetzt ist.

Dabei kann das bewegliche Kontaktstück hohl sein und im Inneren ein Antriebselement mit einem Innengewinde aufweisen, in welches die Gewindespindel eingreift. Eine Verdrehung des beweglichen Kontaktstückes beim Verdrehen der Gewindespindel muß dabei behindert sein.

In Weiterführung der Erfindung kann in der Metallkapselung eine Öffnung vorgesehen sein, in der ein zylindrischer Abschnitt aufgenommen ist, durch dessen außenliegenden Boden eine mit der Gewindespindel über einen Isolierbolzen verbundene Antriebsspindel hindurchgeführt ist, wobei der zylindrische Abschnitt das Erdungskontaktstück trägt.

Das feste Kontaktstück und das Erdungskontaktstück können vorteilhaft eine zylindrische Wandung aufweisen, in die das bewegliche Kontaktstück einfahrbar ist.

Die elektrisch leitende Verbindung zwischen dem beweglichen Kontaktstück dem ersten festen Kontaktstück, dem Kontaktgehäuse und dem Erdungskontaktstück kann mittels innerhalb der Kontaktstücke bzw. des Kontaktgehäuses angeordneter Spiralkontaktfedern hergestellt sein.

In zweckmäßiger Weise sind jeweils zwei Spiralfederkontakte an jedem Kontaktstück angeordnet.

Gemäß einer besonders vorteilhaften Ausgestaltung kann das Kontaktgehäuse an einem Trägerabschnitt angeordnet sein und mit diesem eine T-Form bilden, wobei der Quersteg der T-Form unter dem Winkel zu dem Trägerabschnitt ausgerichtet ist. Dann sind in zweckmäßiger Weise die dem Kontaktgehäuse zugeordneten Spiralkontaktfedern an den freien Enden des Kontaktgehäuses angeordnet.

Anhand der Zeichnung, in der zwei Ausführungsbeispiele der Erfindung dargestellt sind, sollten die Erfindung sowie weitere vorteilhafte Ausgestaltungen und Verbesserungen und weitere Vorteile näher erläutert und beschrieben werden.

Es zeigen:
- Fig. 1: eine erste Variante eines Trenn-Erdungsschalters in der Stellung Trennschalter EIN, Erdungsschalter AUS, in einer Längsschnittansicht,
- Fig. 2: die Anordnung gemäß Fig. 1 in der Stellung Trennschalter AUS, Erdungsschalter AUS,
- Fig. 3: die Anordnung gemäß den Fig. 1 und 2 in der dritten Stellung des beweglichen Stellung des Kontaktstückes, Trennschalter AUS, Erdungsschalter EIN, und

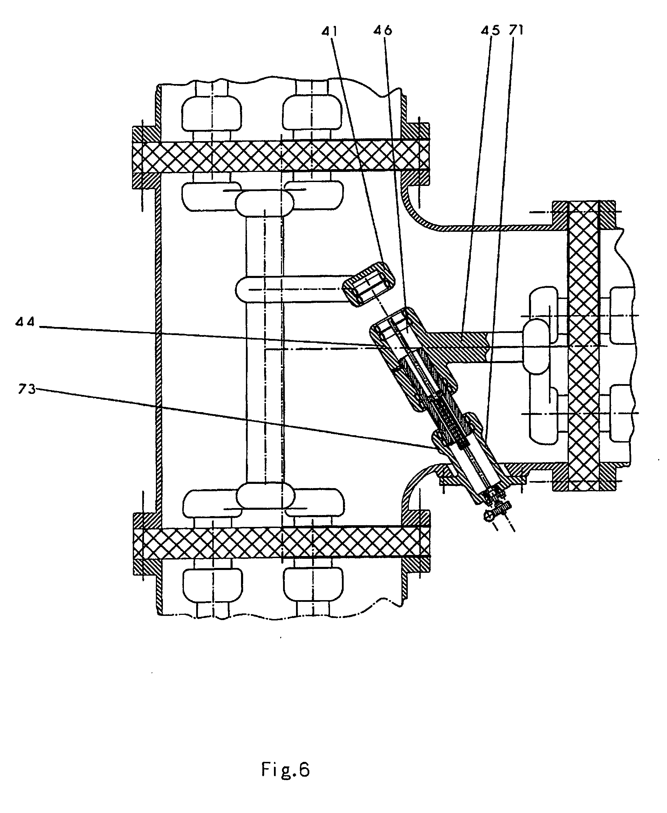

- Fig. 4 bis 6: eine weitere Ausführungsform der Erfindung, in jeweils den gleichen Stellungen wie die in den Fig. 1 bis 3 beschriebene Anordnung.

Die bei beiden Trenn-Erdungsschalteranordnungen gleichen Teile werden mit gleichen Bezugsziffern bezeichnet.

Eine elektrische Hochspannungsschaltanlage besitzt einen ersten Leitungszug 10, der eine der Anzahl der Phasen entsprechende Anzahl von Phasenleitern oder Innenleitern 11, 12 und eine Metallkapselung 13 aufweist, die einen Endflansch 14 besitzt, an dem ein Schottungsisolator 15 befestigt ist. Dieser Schottungsisolator 15 dient gleichzeitig auch zur Durchführung der Phasen- oder Innenleiter 11 und 12. An diesen Schottungsisolator schließt sich, wie weiter unten näher beschrieben werden soll, ein Trennund Erdungsschalter 16 an, der ein Gehäuse 17 aufweist, welches eine T-Form besitzt. Das eine Ende des Querbalkens 18 besitzt einen Flansch 19, der dem Flansch 14 entspricht und mittels einer Schraubverbindung 20 mit dem Flansch 14 und dem Isolator 15 verbunden ist. Das andere Ende des Querbalkens 18 besitzt ebenfalls einen Flansch 21, an den ein dem Isolator 15 entsprechender Isolator 22 angeschlossen ist. An diesen Isolator 22 schließt sich ein Gegenflansch 23 einer der Metallkapselung 13 entsprechenden Metallkapselung 24 an, die den Phasenleitern 11 und 12 entsprechende Phasenleiter 25 und 26 umgibt. Die Phasenleiter 11, 25; 12 und 26 fluchten miteinander, ebenso wie die Mittelachse der Metallkapselung.

Senkrecht zum Querbalken 18 verläuft der Steg 27 der T-Form, und am freien Ende des Gehäuses 17 schließt sich ein Flansch 28 an, dem ein Flansch 29 einer senkrecht zu dem Leitungszug 10 verlaufenden Metallkapselung 30 anschließt. Diese Metallkapselung 30 umschließt senkrecht zu den Phasenleitern 11, 12; 25, 26 verlaufende Phasenleiter 31 und 32.

Die Phasenleiter 11, 25; 12, 26 sind mit Verbindungsleitern 33 elektrisch leitend verbunden, die in einer Ebene liegen und jeweils mittels Übergangsstücken 34, 35 mit den Innenleitern 11, 12 bzw. mit Übergangsstücken 36, 37 mit den Innenleitern 25, 26 verbunden sind.

An den Verbindungsleitern 33 schließen senkrecht dazu verlaufende Trägerstücke 38 an, deren freie Enden ein topfförmiges Festkontaktstück 39 tragen, welches einen Boden 40 und Seitenwandungen 41 aufweist, in deren Innenflächen Spiralkontaktfedern 42 eingebracht sind.

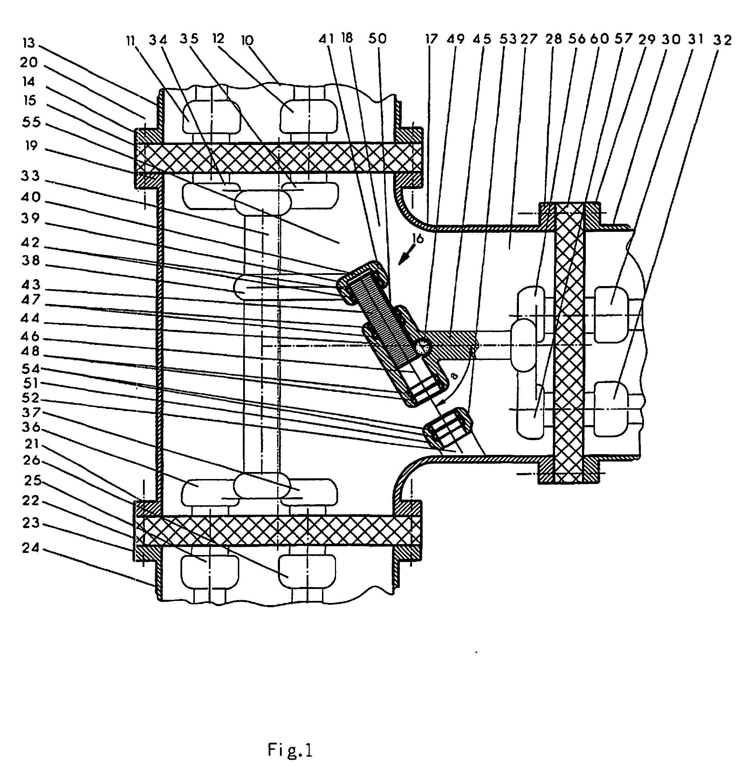

In das Kontaktstück 39 greift in der in Fig. 1 gezeigten Stellung ein bewegliches Kontaktstück 43 ein, welches in einem Kontaktgehäuse 44 verschiebbar aufgenommen ist, welches auf einem Träger 45 abgestützt ist und dabei mit diesem eine T-Form bildet, wobei der Quersteg der T-Form unter einem Winkel α zur Mittelachse des Trägers 45 ausgerichtet ist. Demgemäß ist das Kontaktstück 39 ebenso ausgerichtet, so daß die Mittelachse der Seitenwand 41 mit der unter dem Winkel α zum Trägerteil 45 verlaufenden Mittelachse der Bewegungsrichtung des Kontaktstückes 43 fluchtet.

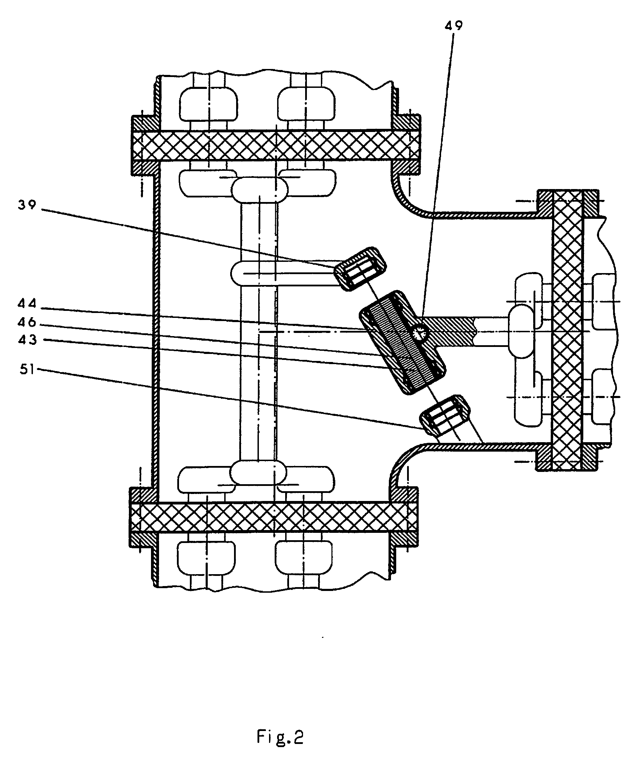

An der Innenfläche der Bohrung 46, die das Gehäuse 44 durchgreift, sind im Bereich der beiden Enden den Spiralkontaktfedern 42 entsprechende Spiralkontaktfederpaare 47 und 48 eingesetzt, und das bewegliche Kontaktstück gelangt dabei mit den Spiralkontaktfedern 42, den Spiralkontaktfedern 47 und den Spiralkontaktfedern 48 (siehe Fig. 2) in elektrisch leitende Berührung.

Innerhalb des Kontaktgehäuses 44 ist senkrecht zum Trägerteil 45 und parallel zu der von den Verbindungsleitern 33 aufgespannten Ebene eine Zahnritzelstange bzw.-welle 49 gelagert, die mit einem Zahnstangenabschnitt 50 auf dem als Kontaktbolzen ausgebildeten beweglichen Kontaktstück angeordnet ist.

Mit der Mittelachse der Bewegungsrichtung des beweglichen Kontaktstückes 43 fluchtend ist an der Innenfläche des Steges des Gehäuses 17 ein Erdungskontaktstück 51 mittels eines Trägerteils 52 befestigt, welches ebenso wie das Kontaktstück 39 eine zylindrische Wandung 53 aufweist, in deren Innenfläche Spiralkontaktfedern eingebracht sind.

Der Innenraum 55 des Gehäuses 17 ist, wie der Innenraum der Metallkapselungen 13, 24 und 30 mit Isoliergas, vorzugsweise SF₆-Gas gefüllt.

An den Trägern 45 schließen sich den Zwischenstücken 34, 35; 36, 37 entsprechende Zwischenstücke 56, 57 an, die der Verbindung der den einzelnen Phasen zugehörigen Träger 45 zu den Innenleitern 31, 32 dienen.

Die Fig. 1 zeigt den Trenn-Erdungsschalter in Einschaltstellung, bei dem das Kontaktstückgehäuse 44 über das bewegliche Kontaktstück 43 mit dem Kontaktstück 39 elektrisch leitend verbunden ist. Ein Stromfluß verläuft dann von den Phasenleitern 11, 25; 12, 26 über den geschlossenen Trennschalter zu den Phasenleitern 31, 32.

Durch Verdrehung der Zahnritzelwelle 49 kann das bewegliche Kontaktstück 43 in das Kontaktgehäuse 44 hineingezogen werden, so daß sich das bewegliche Kontaktstück 43 vollständig in der Bohrung 46 befindet. Dabei ist die Länge des Kontaktstückes 43 der Länge des Kontaktgehäuses 44 angepaßt.

Die Fig. 2 zeigt den Trenn-Erdungsschalter in der Stellung Trennschalter AUS, Erdungsschalter AUS.

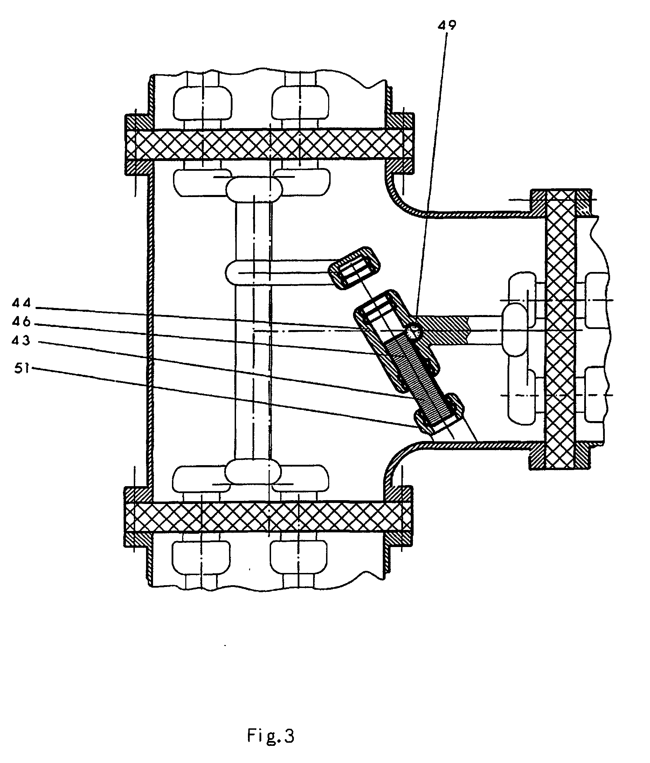

Wenn die Zahnradritzelwelle 49 weiter verdreht wird, dann fährt das bewegliche Kontaktstück 43 aus dem Kontaktgehäuse 44 heraus und in das Erdungskontaktstück 51, siehe Fig. 3, ein, so daß hier der Trennschalter aus- und der Erdungsschalter eingeschaltet ist.

Nachzutragen ist, daß zwischen den Flanschen 28 und 29 ein den Isolatoren 15, 22, entsprechender Isolator 60 eingebracht ist.

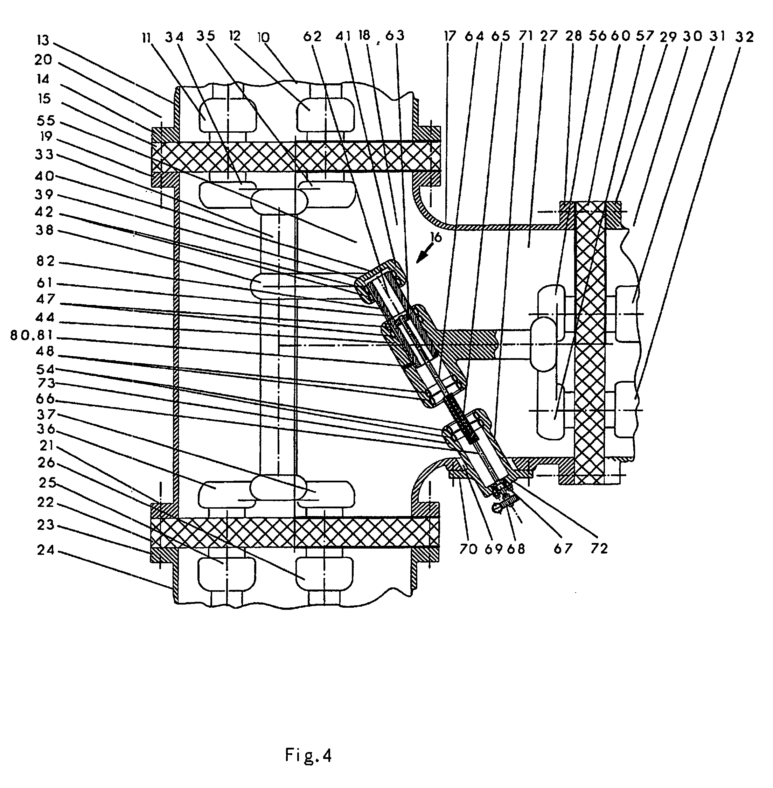

Es sei nun Bezug genommen auf die Fig. 4.

Die meisten Komponenten sind den Komponenten der Anordnung der Fig. 1 gleich, so daß auch hier die gleichen Bezugsziffern verwendet werden.

Zur Bildung des Trenn-Erdungsschalters ist ein bewegliches Kontaktstück 61 vorgesehen, welches eine Innenbohrung 62 aufweist, in der etwa in der Mitte zwischen den beiden Enden des beweglichen Kontaktstückes 61 ein Fixierstück 63 mit einem Innengewinde befestigt ist. In dieses Innengewinde ist eine Gewindespindel 64 eingesetzt, die unter Zwischenfügung einer Isolierstange 65 mit einer Antriebsspindel 66 fest verbunden ist, die über eine gasdichte Durchführung 67 mit einem hier als Schneckenantrieb 68 ausgebildeten Antrieb versehen ist, der die Antriebsspindel 66 in Drehung versetzt.

Das Gehäuse 17 besitzt in dem T-Steg 27 einen Durchbruch 69, der mittels eines Flansches 70 verschlossen ist, an dem ein Zylinderabschnitt 71 anschließt, der nach außen über einen Topfboden 72 abgeschlossen ist, in dem die Drehdurchführung 67 eingesetzt ist. Der Zylinderabschnitt 71 ragt nach innen in das Gehäuse 17 ein und besitzt an seinem freien Ende eine Erweiterung 73, in der die Spiralkontaktfedern 54 eingesetzt sind. Damit dient die Erweiterung 73 als Erdungskontaktstück und die elektrisch leitende Verbindung erfolgt über den Flansch hin zu dem Gehäuse 17.

Die Fig. 4 zeigt die Anordnung in der Stellung Trennschalter EIN, in der das bewegliche Kontaktstück 61 ins Innere der Zylinderwand 41 eingreift und mit den darin vorgesehenen Spiralkontaktfedern in elektrisch leitender Verbindung steht. Man erkennt, daß in der Stellung Trennschalter EIN das bewegliche Kontaktstück 61 mit den Spiralkontaktfedern 47 des Kontaktgehäuses 44 in Verbindung steht.

Es ist noch festzuhalten, daß das Kontaktgehäuse 44 eine radiale Öffnung 80 aufweist, in der ein Führungsstein 81 eingesetzt ist, der in eine Längsnut 82 an der Außenfläche des beweglichen Kontaktstückes 61 eingreift; auf diese Weise wird verhindert, daß sich das bewegliche Kontaktstück 61 dreht, wenn die Antriebsspindel 66 und die Gewindespindel 44 in Drehung versetzt wird.

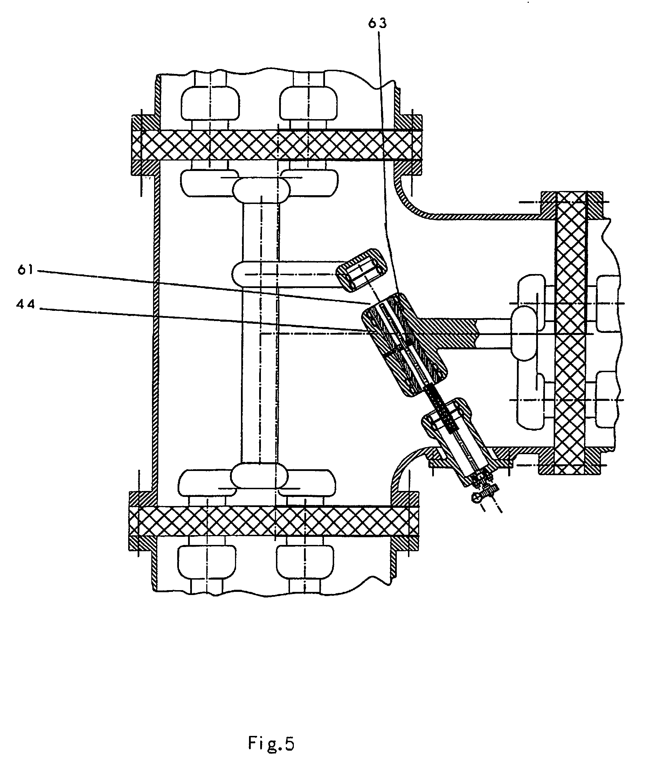

Fig. 4 zeigt die Anordnung in der Stellung Trennschalter EIN. Durch Verdrehen der Antriebsspindel 66 und der Gewindespindel 64 kann das bewegliche Kontaktstück 61 über das Innengewindestück 63 ins Innere des Kontaktgehäuses 44 hineingefahren werden, so daß die Stellung gemäß Fig. 5, Trennschalter AUS, Erdungsschalter AUS, erreicht ist. Wenn die Gewindespindel 64 weiter verdreht wird, dann fährt das bewegliche Kontaktstück 61 aus dem Kontaktgehäuse 44 heraus und greift in das Innere der Erweiterung 73 ein, wodurch die Stellung Trennschalter AUS, Erdungsschalter EIN, erreicht wird.

Nachzutragen ist, daß auch hier die Mittelachse der zylindrischen Wand 41, der Bohrung 46 des Kontaktgehäuses 44 und die Mittelachse der Erweiterung 73 sowie des zylindrischen Abschnittes 71 miteinander fluchten. Sie sind in einem Winkel α zur Mittelachse des Trägerabschnittes 45 angeordnet. Dieser Winkel beträgt bei der Ausführung nach Fig. 1 und Fig. 4 ca. 60°.

Die Spiralfederkontakte sind an sich bekannt und befinden sich in Rillen innerhalb der entsprechenden Kontaktstücken. Sie sind bei der vorliegenden Anordnung gemäß Fig. 1 und 4 jeweils als Spiralkontaktfederpaare ausgebildet (siehe auch Fig. 7).

Die Zahnritzelwelle 49 bei der Ausgestaltung nach Fig. 1 kann zusätzlich mit einer lsolierwelle, die als Antriebswelle dient, verbunden sein und wird von außen angetrieben.

Das bewegliche Kontaktstück beider Ausführungen gemäß Fig. 1 und 4 ist so ausgebildet, daß durch das Verschieben bzw. Verfahren auf der Längsachse nur die Stellung Trennschalter EIN oder nur die Stellung Erdungsschalter EIN erreicht werden kann, wodurch eine Fehlschaltung wie Trennschalter EIN und Erdungsschalter EIN definitiv ausgeschlossen ist. Durch die Anbringung der Spiralfederkontakte an beiden Enden des Kontaktgehäuses 44 kann die Länge des beweglichen Kontaktstückes kurz gehalten werden, was eine kompakte Bauweise für einen dreipolig gekapselten Trenn-Erdungsschalter ermöglicht.

## Patentansprüche

1. Trenn-Erdungsschalter einer metallgekapselten, gasisolierten Hochspannungsschaltanlage
- mit einem mit einem ersten Innenleiter (33) verbundenen ersten festen Kontaktstück (39),
- mit einem mit einem zweiten Innenleiter (31, 32) verbundenen zweiten festen Kontaktstück (44),
- mit einem festen Erdungskontaktstück (51),
- mit einem beweglichen Schubkontaktstück (43, 61), das in einem das zweite Kontaktstück (44) bildenden Kontaktgehäuse linear verschiebbar geführt ist,
- wobei die Mittelachsen der beiden festen Kontaktstücke (39, 44) und des Erdungskontaktstückes (51) bzw. die Mittelachse der Bewegungsbahn des Schubkontaktstückes (43, 61) in einer Linie liegen,
- wobei die Bewegungsbahn des Schubkontaktstückes unter einem Winkel (α) zum ersten (33) bzw. zweiten Innenleiter (31, 32) verläuft,
- wobei das Schubkontaktstück (43, 61) in einer ersten Stellung die beiden festen Kontaktstücke (39, 44) und in einer zweiten Stellung das zweite feste Kontaktstück (44) mit dem Erdungskontaktstück (51) verbindet
- und mit einem T-förmigen Gehäuse (17) mit durchlaufendem Steg (27) und Querbalken (18) hierzu,
**dadurch gekennzeichnet,**
- **daß** der erste Innenleiter (33) innerhalb des Querbalkens (18) dieses Gehäuses (17) über einen Verbindungsleiter (33) von einem ersten Flansch (19) zu einem zweiten Flansch (21) verläuft, wobei der Verbindungsleiter (33) über ein senkrecht dazu verlaufendes Trägerstück (38) das erste feste Kontaktstück (44) trägt,
- **daß** der zweite Innenleiter (31, 32) im Steg (27) dieses Gehäuses (17) senkrecht zum ersten Innenleiter (33) verläuft und
- **daß** das Erdungskontaktstück (51) mittels eines Trägerteils (52) an der Innenfläche des Steges (27) des Gehäuses (17) befestigt ist.

2. Trenn-Erdungsschalter nach Anspruch 1, **dadurch gekennzeichnet, daß** das Schubkontaktstück (43) von einem Zahngetriebe (49, 50) antreibbar ist, dessen Ritzel (49) im Kontaktgehäuse (43) untergebracht ist und mit einem Zahnstangenabschnitt (50) am Schubkontaktstück (43) kämmt.

3. Trenn-Erdungsschalter nach Anspruch 1, **dadurch gekennzeichnet, daß** das bewegliche Kontaktstück (61) mittels einer Gewindespindel (64) antreibbar ist, die von einem außerhalb der Kapselung (17) angeordneten Antrieb in Drehung versetzt ist.

4. Trenn-Erdungsschalter nach Anspruch 3, **dadurch gekennzeichnet, daß** das bewegliche Kontaktstück (61) hohl ist und im Inneren ein Antriebselement (63) mit einem Innengewinde aufweist, in welches die Gewindespindel (64) eingreift, und daß eine Verdrehung des beweglichen Kontaktstückes (61) beim Verdrehen der Gewindespindel (64) behindert ist.

5. Trenn-Erdungsschalter nach einem der Ansprüche 3 und 4, **dadurch gekennzeichnet, daß** in der Metallkapselung (17) eine Öffnung (69) vorgesehen ist, in der ein zylindrischer Abschnitt (71) aufgenommen ist, durch dessen außenliegenden Boden (72) eine mit der Gewindespindel (64) über einen Isolierbolzen (65) verbundene Antriebsspindel (66) hindurchgeführt ist, und daß der zylindrische Abschnitt das Erdungskontaktstück trägt.

6. Trenn-Erdungsschalter nach einem der vorherigen Ansprüche, **dadurch gekennzeichnet, daß** das feste Kontaktstück (39) und das Erdungskontaktstück (51, 73) eine zylindrische Wandung (41, 53, 73) aufweisen, in die das bewegliche Kontaktstück (43, 61) einfahrbar ist.

7. Trenn-Erdungsschalter nach einem der vorherigen Ansprüche, **dadurch gekennzeichnet, daß** die elektrisch leitende Verbindung zwischen dem beweglichen Kontaktstück (43, 61) dem ersten festen Kontaktstück (39), dem Kontaktgehäuse (44) und dem Erdungskontaktstück (73) mittels innerhalb der Kontaktstücke bzw. des Kontaktgehäuses angeordneter Spiralkontaktfedern (42, 47, 48, 54) gebildet sind.

8. Trenn-Erdungsschalter nach Anspruch 7, **dadurch gekennzeichnet, daß** jeweils zwei Spiralfederkontakte an jedem Kontaktstück angeordnet sind.

9. Trenn-Erdungsschalter nach einem der vorherigen Ansprüche, **dadurch gekennzeichnet, daß** das Kontaktgehäuse (44) an einem Trägerabschnitt (45) angeordnet ist und mit diesem eine T-Form bildet, wobei der Quersteg der T-Form unter dem Winkel (α) zu dem Trägerabschnitt (45) ausgerichtet ist.

10. Trenn-Erdungsschalter nach Anspruch 9, **dadurch gekennzeichnet, daß** die dem Kontaktgehäuse (44) zugeordneten Spiralkontaktfedern (47, 48) an den freien Enden des Kontaktgehäuses angeordnet sind.

## Claims

1. Combined disconnector and earthing switch for a metal-encapsulated, gas-insulated high-voltage switchgear assembly
- having a first fixed contact piece (39) which is connected to a first inner conductor (33),
- having a second fixed contact piece (44) which is connected to a second inner conductor (31, 32),
- having a fixed earthing contact piece (51),
- having a moving sliding contact piece (43, 61) which is guided such that it can move linearly in a contact enclosure which forms the second contact piece (44),
- with the centre axes of the two fixed contact pieces (39, 44) and of the earthing contact piece (51) and the centre axis of the movement path of the sliding contact piece (43, 61) lying on one line,
- with the movement path of the sliding contact piece running at an angle (α) to the first (33) and second inner conductor (31, 32),
- with the sliding contact piece (43, 61) connecting the two fixed contact pieces (39, 44) to the earthing contact piece (51) in a first position, and connecting the second fixed contact piece (44) to the earthing contact piece (51) in a second position,
- and having a T-shaped enclosure (17) with a web (27) running through it and with a transverse bar (18),
**characterized**
- **in that** the first inner conductor (33) runs within the transverse bar (18) of this enclosure (17) via a connecting conductor (33) from a first flange (19) to a second flange (21), with the connecting conductor (33) being fitted, via a supporting piece (38) which runs at right angles to it, with the first fixed contact piece (44),
- **in that** the second inner conductor (31, 32) runs at right angles to the first inner conductor (33) in the web (27) of this enclosure (17), and
- **in that** the earthing contact piece (51) is attached to the inner surface of the web (27) of the enclosure (17) by means of a supporting part (52).

2. Combined disconnector and earthing switch according to Claim 1, **characterized in that** the sliding contact piece (43) can be driven by a toothed drive (49, 50), whose pinion (49) is accommodated in the contact enclosure (43) and engages with a toothed rod section (50) on the sliding contact piece (43).

3. Combined disconnector and earthing switch according to Claim 1, **characterized in that** the moving contact piece (61) can be driven by means of a threaded spindle (64) which is caused to rotate by a drive which is arranged outside the encapsulation (17).

4. Combined disconnector and earthing switch according to Claim 3, **characterized in that** the moving contact piece (61) is hollow and, in the interior, has a drive element (63) with an internal thread, in which the threaded spindle (64) engages, and **in that** rotation of the moving contact piece (61) during rotation of the threaded spindle (64) is impeded.

5. Combined disconnector and earthing switch according to one of Claims 3 and 4, **characterized in that** the metal encapsulation (17) has an opening (69) in which a cylindrical section (71) is held, through whose external base (72) a drive spindle (66) is passed which is connected to the threaded spindle (64) via an insulating bolt (65), and **in that** the cylindrical section is fitted with the earthing contact piece.

6. Combined disconnector and earthing switch according to one of the preceding claims, **characterized in that** the fixed contact piece (39) and the earthing contact piece (51, 73) have a cylindrical wall (41, 53, 73) into which the moving contact piece (43, 61) can be moved.

7. Combined disconnector and earthing switch according to one of the preceding claims, **characterized in that** the electrically conductive connection between the moving contact piece (43, 61) and the first fixed contact piece (39), the contact enclosure (44) and the earthing contact piece (73) are formed by means of spiral contact springs (42, 47, 48, 54) which are arranged within the contact pieces and the contact enclosure.

8. Combined disconnector and . earthing switch according to Claim 7, **characterized in that** two spiral spring contacts are in each case arranged on each contact piece.

9. Combined disconnector and earthing switch according to one of the preceding claims, **characterized in that** the contact enclosure (44) is arranged on a supporting section (45) and forms a T-shape with it, with the transverse web of the T-shape being aligned at an angle (α) to the supporting section (45).

10. Combined disconnector and earthing switch according to Claim 9, **characterized in that** the spiral contact springs (47, 48) which are associated with the contact enclosure (44) are arranged . at the free ends of the contact enclosure.

## Revendications

1. Sectionneur de mise à la terre pour une installation de commutation à haute tension blindée, à isolation gazeuse,
- avec une première pièce de contact fixe (39) reliée à un premier conducteur interne (33),
- avec une deuxième pièce de contact fixe (44) reliée à un deuxième conducteur interne (31, 32),
- avec une pièce de contact de terre (51) fixe,
- avec une pièce de contact coulissante (43, 61) mobile qui est guidée avec possibilité de déplacement linéaire dans un boîtier de contact formant la deuxième pièce de contact (44),
- les axes médians des deux pièces de contacts fixes (39, 44) et de la pièce de contact de terre (51), voire l'axe médian de la trajectoire de déplacement de la pièce de contact coulissante (43, 61) étant situés sur une ligne,
- la trajectoire de déplacement de la pièce de contact coulissante (43, 61) s'étendant sous un angle (α) par rapport au premier (33) ou au deuxième (31, 32) conducteur,
- la pièce de contact coulissante (43, 61) reliant, dans une première position, les deux pièces de contact fixes (39, 44), et dans une seconde position, la deuxième pièce de contact fixe (44) à la pièce de contact de terre (51),
- et avec un boîtier (17) en forme de T avec une partie corps (27) continue et une partie aile transversale (18),
**caractérisé**
- **en ce que** le premier conducteur interne (33) à l'intérieur de la partie aile transversale (18) du boîtier (17) s'étend d'une première bride (19) à une deuxième bride (21) en passant par un conducteur de liaison (33), le conducteur de liaison (33) portant la première pièce de contact fixe (44) par l'intermédiaire d'une pièce de support (38) perpendiculaire audit conducteur,
- **en ce que** le deuxième conducteur interne (31, 32) dans la partie corps (27) du boîtier (17) s'étend perpendiculairement au premier conducteur interne (33) et
- **en ce que** la pièce de contact de terre (51) est fixée par l'intermédiaire d'un élément de support (52) à la surface intérieure du corps (27) du boîtier (17).

2. Sectionneur de mise à la terre selon la revendication 1, **caractérisé en ce que** la pièce de contact coulissante (43) peut être entraînée par un mécanisme à engrenage (49, 50), dont le pignon (49) est logé dans le boîtier de contact (43) et engrène avec un segment de crémaillère (50) prévu sur la pièce de contact coulissante (43).

3. Sectionneur de mise à la terre selon la revendication 1, **caractérisé en ce que** la pièce de contact mobile (61) peut être entraînée par un mécanisme à vis (64), qui est mis en rotation par un moyen d'entraînement disposé à l'extérieur du blindage (17).

4. Sectionneur de mise à la terre selon la revendication 3, **caractérisé en ce que** la pièce de contact mobile (61) est creuse et comporte intérieurement un élément d'entraînement (63) avec un filetage intérieur dans lequel s'engage la vis (64) et **en ce qu'**une rotation de la pièce de contact mobile (61) lors de la rotation de la vis (64) est empêchée.

5. Sectionneur de mise à la terre selon une des revendications 3 et 4, **caractérisé en ce qu'**il est prévu dans le blindage métallique (17) une ouverture (69) dans laquelle est monté une pièce (71) cylindrique dont le fond (72) est traversé par une broche d'entraînement (66) liée à la vis (64) par une cheville isolante (65) et **en ce que** la pièce cylindrique porte la pièce de contact de terre (43, 61).

6. Sectionneur de mise à la terre selon une des revendications précédentes, **caractérisé en ce que** la pièce de contact fixe (39) et la pièce de contact de terre (51, 73) présentent une paroi (41, 53, 73) cylindrique à l'intérieur de laquelle la pièce de contact mobile (43, 61) peut rentrer.

7. Sectionneur de mise à la terre selon une des revendications précédentes, **caractérisé en ce que** la liaison électro-conductrice entre la pièce de contact mobile (43, 61), la pièce de premier contact fixe (39), le boîtier de contact (44) et la pièce de contact de terre (73) est réalisée au moyen de ressorts de contact en spirale (42, 47, 48, 54) disposés à l'intérieur des pièces de contact ou du boîtier de contact.

8. Sectionneur de mise à la terre selon la revendication 7, **caractérisé en ce que** deux contacts à ressort en spirale sont associés chaque fois à chacune des pièces de contact.

9. Sectionneur de mise à la terre selon une des revendications précédentes, **caractérisé en ce que** le boîtier de contact (44) est disposé sur une partie de support (45) et définit avec celle-ci une forme de T, la partie transversale du T formant un angle (α) avec la partie de support (45).

10. Sectionneur de mise à la terre selon la revendication 9, **caractérisé en ce que** les ressorts de contact en spirale (47, 48) associés au boîtier de contact (44) sont disposés aux extrémités libres dudit boîtier de contact.
